# EUROPEAN PATENT SPECIFICATION

(11) **EP 1 695 898 B1**
(45) Date of publication and mention of the grant of the patent: **29.10.2008**
(21) Application number: 06003629.0
(22) Date of filing: 22.02.2006
(51) Int. Cl.: B62K 19/12, B62K 11/04

(54) **Rear frame for motorcycle**
Hinterrahmen für ein Motorrad
Châssis arrière pour motocycle

(30) Priority: 25.02.2005 JP 2005051594
(43) Date of publication of application: 30.08.2006
(73) Proprietor: Yamaha Hatsudoki Kabushiki Kaisha, Iwata-shi, Shizuoka-ken 438-8501 (JP)
(72) Inventor: Suzuki, Takaharu c/o Yamaha Hatsudoki Kabushiki Kaisha, Iwata-shi Shizuoka-ken 438-8501 (JP); Inami, Junichi c/o Yamaha Hatsudoki Kabushiki Kaisha, Iwata-shi Shizuoka-ken 438-8501 (JP); Kitsunai, Toru c/o Yamaha Hatsudoki Kabushiki Kaisha, Iwata-shi Shizuoka-ken 438-8501 (JP); Koike, Toshikatsu c/o Yamaha Hatsudoki Kabushiki Kaisha, Iwata-shi Shizuoka-ken 438-8501 (JP)
(74) Representative: Grünecker, Kinkeldey, Stockmair & Schwanhäusser Anwaltssozietät

(56) References cited:
- EP-A- 1 081 036
- US-A- 5 375 677
- US-A1- 2004 124 031
- PATENT ABSTRACTS OF JAPAN vol. 2003, no. 12, 5 December 2003 (2003-12-05) -& JP 2004 106609 A (YAMAHA MOTOR CO LTD), 8 April 2004 (2004-04-08)
- PATENT ABSTRACTS OF JAPAN vol. 2003, no. 12, 5 December 2003 (2003-12-05) -& JP 2004 210023 A (SHOWA DENKO KK), 29 July 2004 (2004-07-29)

## Description

The present invention relates to a motorcycle rear frame according to the preamble portion of claim 1. More particularly, the present invention relates to a motorcycle rear frame composed of a magnesium alloy, a motorcycle incorporating the same and a method for producing the same.

For structural parts (e.g., frames) of a motorcycle, steel has conventionally been used because it provides good mechanical properties and processibility, and also is inexpensive. However, in order to attain improved mileage and running performances, it has become important to reduce the mass of the body of a motorcycle. Therefore, use of a lighter material than iron for constructing a motorcycle body has been studied.

In recent years, inexpensive refining methods for titanium, aluminum, magnesium, and the like, each of which has a smaller specific gravity than that of iron, and methods for producing alloys containing such metals have been developed. There have also been developed techniques for improving the strength and processibility of such metals. This has led to proposals for using titanium, aluminum, or magnesium as structural members of motorcycles. In particular, since magnesium has a density which is 1/4 of that of iron, it is considered that use of magnesium or a magnesium alloy as the material of structural parts will greatly reduce the mass of a motorcycle.

For example, Japanese Laid-Open Patent Publication No. 2003-312577 discloses a swing arm for a motorcycle, which includes an arm lower-part composed of a magnesium alloy and an arm upper-part composed of an aluminum alloy.

In the case of a motorcycle, substantial effects of mass reduction can be obtained by forming large-sized structural parts (e.g., frames) from a magnesium alloy. In particular, a seat frame which is provided below a rider's or passenger's seat is located in a relatively upper part of the body. Therefore, reducing the mass of a seat frame will make for a reduced mass of the body upper portion; which will also enhance vehicle stability.

A seat frame may be located close to exhaust pipes, whose temperature will become high during travel, and therefore is required to be refractory. Moreover, because of having to support the rider's or passenger's weight, a seat frame needs to have high mechanical properties. Accordingly, high refractoriness and high mechanical properties are requisites when forming a seat frame from a magnesium alloy.

The refractoriness of a magnesium alloy is improved by adding calcium or rare-earth elements thereto. Therefore, it is preferable that a magnesium alloy used for forming a seat frame contains large amounts of calcium or rare-earth elements.

On the other hand, a structural part attains a high strength when it is integrally formed by a molding technique. Therefore, a seat frame should preferably be formed by a molding technique. However, adding calcium or rare-earth elements to a magnesium alloy for enhanced refractoriness will increase the viscosity of the melted magnesium alloy, which means that when a large-sized part is to be formed by a molding technique, the melt will have poor fluidity. This will make difficult the molding-based formation of any large-sized parts of desired shapes.

From these reasons, it has been difficult to realize a motorcycle which includes large-sized parts made of an magnesium alloy.

From JP 2004-106609 there is known a rear frame of a motorcycle with a pair of left and right rail parts, said left and right rail parts being interconnected by a plurality of cross members. Therein, the rear frame is closed from below by a separate structural member.

Further, US 5,375,677 discloses a motorcycle rear frame for supporting a rider's seat, comprising a bottom sections extending in a longitudinal direction, and side wall sections extending along the longitudinal direction and being provided on the bottom section in such a manner that the bottom section is interposed therebetween, at least one first base each having an engaging portion for supporting at least one load-bearing part (the step holder), and at least one second base each having an engaging portion for supporting at least one load-bearing part (the step holder).

It is an objective of the present invention to provide a motorcycle rear frame as indicated above which it composed of a magnesium alloy, and which has a high strength and excellent refractoriness, a motorcycle incorporating the same and a method for producing the same.

This objective is solved in an inventive manner by a motorcycle rear frame having the feature combination of claim 1.

According to the present teaching, the motorcycle rear frame is composed of a magnesium alloy, and has a rib extending along a direction which traverses the longitudinal direction. Therefore, a light-weighted seat frame which has a high mechanical strength can be obtained. Moreover, the seat frame has excellent refractoriness because its heat-releasing ability is enhanced by the rib(s). Therefore, a magnesium-alloy seat frame which has a high strength and excellent refractoriness is realized. Moreover, a motorcycle which is much lighter-weighted than conventionally and has excellent mileage and vehicle stability is realized.

Other features, elements, processes, steps, characteristics and advantages of the present invention will become more apparent from the following detailed description of preferred embodiments of the present invention with reference to the attached drawings.

In the following, the present invention is explained in greater detail with respect to several embodiments thereof in conjunction with the accompanying drawings, wherein:
FIG. **1** is a schematic side view of a motorcycle having a seat frame according to the present teaching.
FIG. **2** is an exploded perspective view showing the seat frame, as well as structures above the seat frame, of the motorcycle shown in FIG. **1**.
FIG. **3** is an exploded perspective view showing the seat frame, as well as structures below the seat frame, of the motorcycle shown in FIG. **1**.
**FIG. 4** is a perspective view showing the structure of a stay for supporting a muffler which is provided on the seat frame shown in FIGS. **2** and **3**.
FIG. **5A** is a graph showing temperature dependences of tensile strength of a magnesium alloy and an aluminum alloy. FIG. **5B** is a graph showing decreases in strength, against different thicknesses, of moldings which are composed of a magnesium alloy or an aluminum alloy.
FIG. **6** is a plan view showing a supporting structure for footrests, which is provided in the seat frame shown in FIGS. **2** and **3**.
FIG. **7** is a diagram showing forces which are received by the supporting structure when loads are applied to footrests.
FIGS. **8A** and **8B** show cross-sectional shapes of a rib and a base of the supporting structure.
FIG. **9** is a plan view showing another example of a supporting structure for footrests which is provided in the seat frame shown in FIGS. **2** and **3**.
FIG. **10** is a plan view showing yet another example of a supporting structure for footrests which is provided in the seat frame shown in FIGS. **2** and **3**.
FIG. **11** is a cross-sectional view showing examples of molds for forming the seat frame by molding.

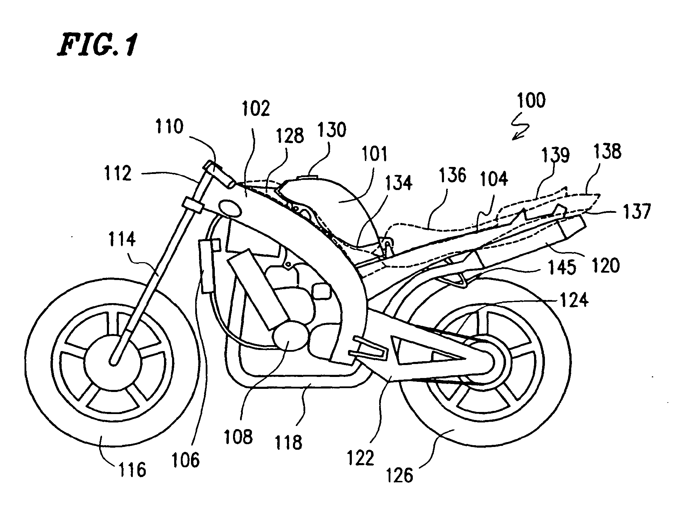

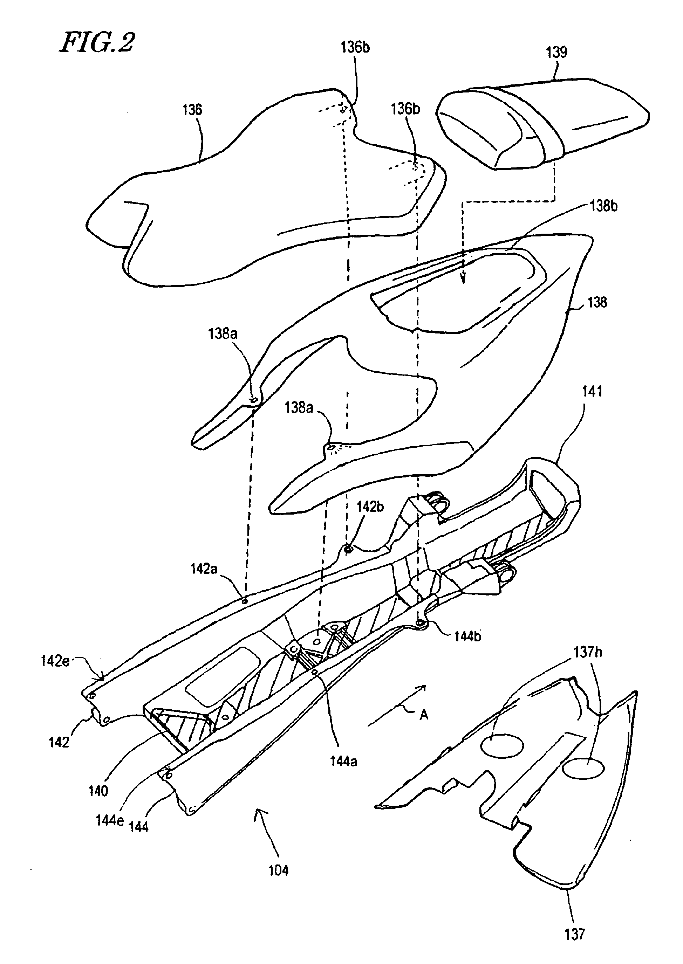

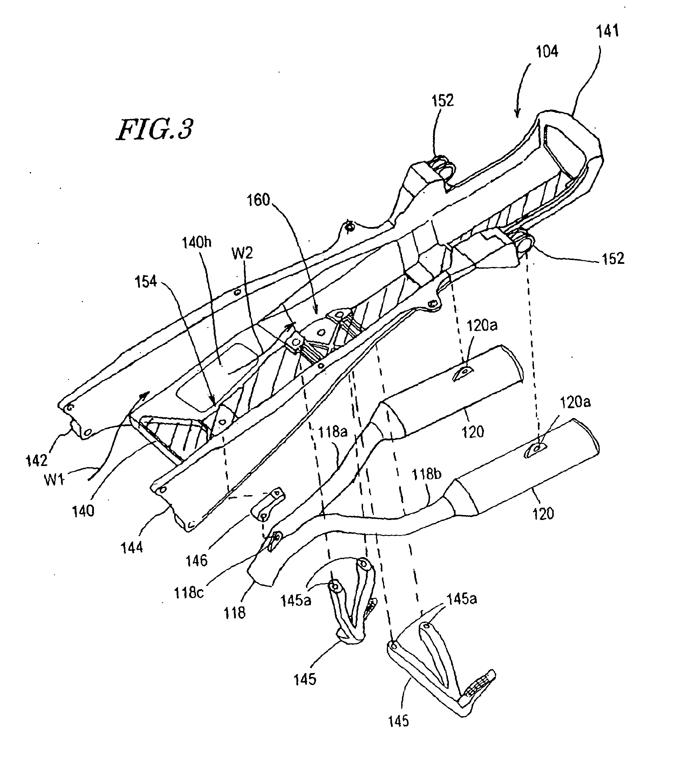

Hereinafter, with reference to the figures, an embodiment of a motorcycle seat frame according to the present teaching, as well as a motorcycle incorporating the same, will be described. The element referred to as the seat frame in this specification is also known as a subframe or a rear frame. FIG. **1** is a schematic side view of a motorcycle **100** having a motorcycle seat frame **104** according to the present teaching (hereinafter simply referred to as a seat frame). FIG. **2** is an exploded perspective view showing the seat frame **104**, as well as structures above the seat frame **104**, of the motorcycle **100**. FIG. **3** is an exploded perspective view showing the seat frame **104**, as well as some of the structures below the seat frame **104**, of the motorcycle **100**.

Firstly, the general structure of the motorcycle **100** will be described. The motorcycle **100** includes a fuel tank **101**, a main frame **102**, a seat frame **104**, an internal combustion engine **108**, a front wheel **116**, and a rear wheel **126**. The motorcycle **100** is a saddle-riding type vehicle to be ridden by a rider who mounts on it. The main frame **102** includes a pair of frames extending from a head pipe **112** (which is located at the front of the vehicle) toward the rear. At a central portion of the motorcycle **100**, each frame constitutes a curved portion so as to extend in the lower direction. One end of the seat frame **104** is connected to the curved portions of the main frame **102**. The main frame **102** and the seat frame **104** compose the body of the motorcycle **100**.

To the head pipe **112**, a front fork **114** is attached so as to be capable of rotating. At one end of the front fork **114**, the front wheel **116** is supported so as to be capable of rotating freely. Handles **110** are affixed to the other end of the front fork **114**.

The fuel tank **101** is mounted astride the main frame **102** and the seat frame **104**, near the central portion of the motorcycle **100.** At the front of the fuel tank **101**, an air cleaner **128** is provided. Moreover, a cap **130** which covers a fuel injection inlet (not shown) is provided on the fuel tank **101**.

The internal combustion engine **108** is supported by the main frame **102** so as to be located below the fuel tank **101**. A radiator **106** is provided in front of the internal combustion engine **108**. An exhaust pipe **118** is connected to an exhaust outlet of the internal combustion engine **108**. Although not shown in detail in FIG. 1, one end of the exhaust pipe **118** is split into plural portions for guiding exhaust gas from a plurality of cylinders of the internal combustion engine **108**. The exhaust pipe **118** extends, below the engine and along the seat frame **104**, toward the rear. As shown in FIG. **3**, the exhaust pipe **118** is split into two portions near the seat frame **104**, each split pipe being connected to a muffler **120**. The exhaust pipe **118** and the mufflers **120** are supported by the seat frame **104**. A pair of footrests **145** are provided on the seat frame **104**.

As shown in FIG. **1**, a rear arm **122** is connected to the main frame **102**. The rear arm **122** supports the rear wheel **126** so as to be capable of rotating freely. The rotary driving force from the internal combustion engine **108** is transmitted to the rear wheel **126** via a chain **124**.

In addition, as shown in FIGS. **1** and **2**, the motorcycle 100 includes: a decorative cover **134** which covers a lower portion of the fuel tank **101**; a rider's seat **136**; a rear cover **137**; a side cover **138**; and a passenger's seat **139**. In order to clearly illustrate the seat frame **104**, these parts are shown by broken lines in FIG. **1**.

In the motorcycle **100**, the seat frame **104** supports the rider's seat **136**, the passenger's seat **139**, the exhaust pipe **118**, the mufflers **120**, and the footrests **145**. Among others, the rider's seat **136**, the passenger's seat **139**, and the footrests **145** will be under substantial loads. On the other hand, the exhaust pipe **118** and the mufflers **120** will have a high temperature. Therefore, as will be specifically described below, the seat frame **104** is designed so that sufficient refractoriness and mechanical strength are obtained in the respective places where these parts are supported.

Next, the seat frame **104** and its neighboring structures will be specifically described. FIG. **2** shows the seat frame **104**, the rider's seat **136**, the rear cover **137**, the side cover **118**, and the passenger's seat **139**.

The seat frame **104** includes: a bottom section **140** (shown hatched in FIG. **2**) which extends along a longitudinal direction **A**; and side wall sections **142** and **144**, which extend along the longitudinal direction **A** and are provided on the bottom section **140** in such a manner that the bottom section **140** is interposed therebetween. The width of the bottom section **140** along a direction which is perpendicular to the longitudinal direction **A** is generally broader at the engine side (i.e., the vehicle front) than at the tail lamp side.

Along two sides of the bottom section **140** extending in the longitudinal direction **A**, the side wall sections **142** and **144** are provided so as to rise from the bottom section **140**. For example, the side wall sections **142** and **144** may be generally perpendicular to the bottom section **140**. Therefore, the cross section of the seat frame **104** taken perpendicularly to the arrow A presents a U shape with a generally rectangular bottom. On an end face **142e** of the side wall section **142** extending along the longitudinal direction A, a first engaging portion **142a** and a second engaging portion **142b** are provided. On an end face **144e** of the side wall sections **144** extending along the longitudinal direction **A**, as first engaging portion **144a** and a second engaging portion **144b** are provided. At the tail-lamp end, the side wall sections **142** and **144** are connected via a connecting section **141**.

As will be specifically described below, since the seat frame **104** will bear the weight of a rider (and a passenger), the seat frame **104** needs to have a high mechanical strength as a whole. Therefore, the seat frame **104** is preferably formed in an integral manner by a molding technique, so that the bottom section **140** and the side wall sections **142** and **144** are fixed together with a high strength. Moreover, the seat frame **104** is formed of a magnesium alloy so as to have a light weight.

The rider's seat **136** is formed in the shape of a saddle, and has a pair of engaging portions **136b**. As indicated by broken lines, the rider's seat **136** is placed in contact with the end face **142e** of the side wall section **142** and with the end face **144e** of the side wall section **144**, in such a manner that the pair of engaging portions **136b** of the rider's seat **136** are respectively aligned with the second engaging portion **142b** of the side wall section **142** and with the second engaging portion **144b** of the side wall section **144**, whereby the rider's seat **136** is supported by the seat frame **104**. The pair of engaging portions **136b** engage with the second engaging portions **142b** and **144b** either directly or via some other parts, and there is no limitation as to the exact structure of these portions so long as it is possible to affix the rider's seat **136** to the seat frame **104**. In the present embodiment, holes are provided in the engaging portions **136b** and in the second engaging portions **142b** and **144b**, so that the corresponding engaging portions are connected by inserting a bolt in each hole and tightening each bolt. The engaging portions **136b** and the second engaging portions **142b** and **144b** may each be structured so as to engage with a pin or a hook.

The side cover **138** has a pair of engaging portions **138a** and a support frame **138b** to which the passenger's seat **139** is affixed. In a manner similar to the rider's seat **136,** the side cover **138** with the passenger's seat **139** being affixed thereto is supported and affixed by the seat frame **104**. Specifically, as indicated by broken lines, the side cover **138** is placed in contact with the end face **142e** of the side wall section **142** and with the end face **144e** of the side wall section **144**, in such a manner that the pair of engaging portions **138a** of the side cover **138** are respectively aligned with the first engaging portion **142a** of the side wall section **142** and with the first engaging portion **144a** of the side wall section **144**, whereby the side cover 138 is supported by the seat frame **104**. Holes are provided in the engaging portions **138a** and in the first engaging portions **142a** and **144a**, and the corresponding engaging portions are fixed together via bolts and nuts. The engaging portions **138a** and the first engaging portions **142a** and **144a** may be structured so that they are fixed together through either direct engagement or engagement via some other parts, or may be structured so as to engage with pins or hooks.

The rear cover **137** is affixed near the rear end of the seat frame **104**, in such a manner that the seat frame **104** is interposed between the side cover **138** and the rear cover **137**. A pair of openings **137h** are provided in the rear cover **137**.

Thus, the rider's seat **136** and the side cover **138** with the passenger's seat **139** mounted thereon are supported and affixed by the seat frame **104**, in such a manner as to close the opening of the seat frame **104** and form a box structure in the cross section of the seat frame **104**. As a result, forces that are associated with the weight of a rider (and a passenger) who is/are seated on the rider's seat **136** and the passenger's seat **139** are divided between the side wall sections **142** and **144**. Moreover, since these forces will act on or near the connections between the bottom section **140** and the side wall sections **142** and **144**, they mainly act as stresses that compress the side wall sections **142** and **144** in a direction which is parallel to the principal faces of thereof. Therefore, there is little bending moment which acts in a direction of pushing the side wall sections **142** and **144** outside. As a result, the seat frame **104** exhibits a high mechanical strength. In other words, the seat frame **104** as a whole has a high strength, such that it is not likely to be deformed under the weight of a rider (and a passenger). The overall mechanical strength of such a seat frame **104** can be suitably realized by integrally forming the sea frame **104** via molding.

FIG. **3** is an exploded perspective view showing the seat frame **104**, as well as some of the structures below the seat frame **104**, of the motorcycle **100**. FIG. **3** illustrates the seat frame **104**, the exhaust pipe **118**, the mufflers **120**, and the footrests **145**.

The exhaust pipe **118**, which is connected to the internal combustion engine **108**, is split into two pipes **118a** and **118b**. The mufflers **120** are respectively provided on the split pipes **118a** and **118b**. In order to connect the exhaust pipe **118** and the mufflers **120** to the seat frame **104**, an engaging portion **118c** and engaging portions **120a** are provided on the exhaust pipe **118** and on the mufflers **120**, respectively. In order to support the exhaust pipe **118** and the mufflers **120**, the seat frame **104** has a base **154** and a pair of stays **152**. The base **154** is provided on a side of the bottom section **140** facing the internal combustion engine **108**. In the present embodiment, the base **154** has an aperture which serves as an engaging portion. Thus, the base **154** is fixed to a bracket **146**, which in itself is connected to the engaging portion **118c** of the exhaust pipe.

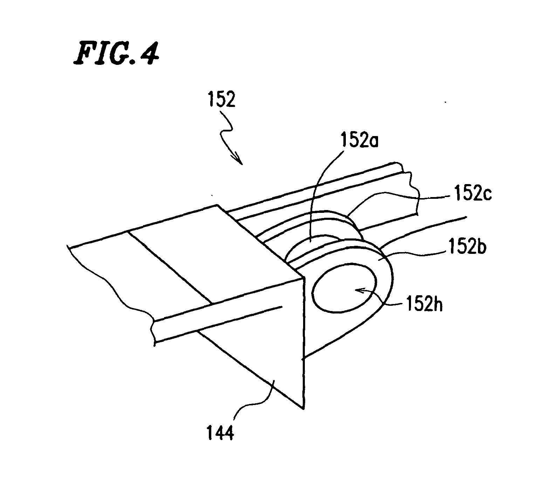

The stays **152** for supporting the mufflers **120** are provided at the tail-lamp side of the side wall sections **142** and **144**. FIG. **4** is a perspective view showing the structure of the neighborhood of each stay **152** (the left-side stay **152** is shown in particular). As shown in FIG. **4**, each stay **152** includes: a cylindrical portion **152a** which defines a hole **152h**; and ribs **152b** and **152c** which are provided around openings at both ends of the cylindrical portion **152a**. The ribs **152b** and **152c** are attached to a portion of the side wall section **144**. A bolt which is inserted in the engaging portion **120a** of the corresponding muffler **120** is mounted in the hole **152h** of the stay **152**, via a damping element such as rubber. The stays **152** are required to have refractoriness and high strength because they are placed close to the mufflers **120**, which will rise to a high temperature. This is the reason why the ribs **152b** and **152c** are provided for enhancing the strength of the stays **152**. Moreover, the ribs **152b** and **152c** make for a greater surface area, and hence a higher level of heat releasing at the surface of the stays **152**. As a result, heat is prevented from being stored in the stays **152** to increase the temperatures thereof.

Note that, as shown in FIG. **2**, the seat frame **104** is covered by the rear cover **137** below one end thereof. However, the stays **152** are exposed through the apertures **137h** of the rear cover **137**. In order to clearly show the structure of the seat frame **104,** the rear cover **137** is omitted in FIG. **3**.

As shown in FIG. **3**, screw holes **145a** (serving as engaging portions) are provided in the pair of footrests **145**, on which a passenger will rest his or her feet. The seat frame **104** includes a supporting structure **160** for supporting the footrests **145**. On a principal face of the bottom section **140** on which the side wall sections **142** and **144** are provided, the supporting structure **160** is formed between the base **154** and the pair of stays **152**. As described earlier, the exhaust pipe **118** and the mufflers **120** are supported by the base **154**, which is provided on the bottom section **140**, and by the stays **152**, which are provided on the side wall sections **142** and **144**. Therefore, the neighborhood of a region of the bottom face **140** where the supporting structure **160** is located is close to the exhaust pipe **118**, so that the supporting structure **160** will be heated from outside of the bottom face **140** due to the heat of the exhaust gas passing through the exhaust pipe **118**. For this reason, the supporting structure **160** is required to have not only sufficient strength for coping with the load which is applied to the footrests **145**, but also refractoriness against the heat which is radiated from the exhaust pipe **118**.

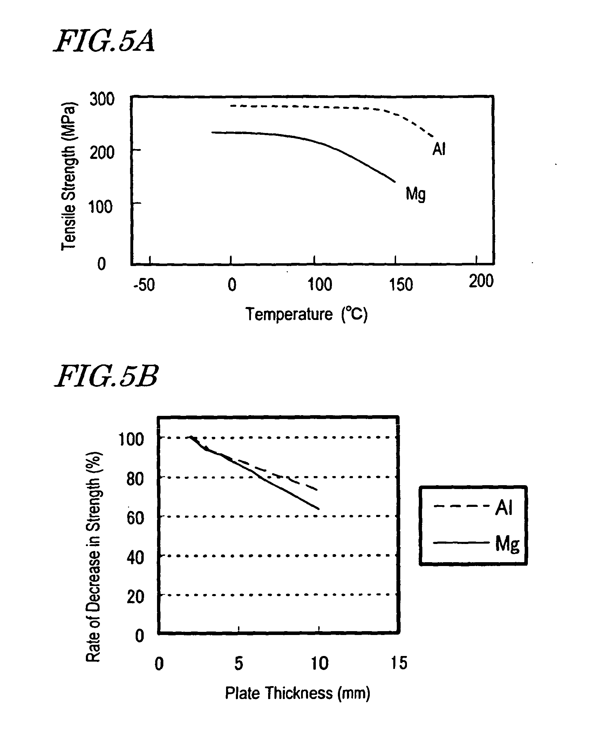

FIG. **5A** is a graph showing the temperature dependence of tensile strength of a magnesium alloy, where data concerning an aluminum alloy is also shown for comparison. The graph of FIG. **5A** was obtained by using magnesium alloy specimens whose composition ranged from Mg-3Al to Mg-9Al, and aluminum alloy specimens whose composition was Al-4Cu-1Mg. Alloys of such compositions are widely used for die-cast techniques for forming structural parts.

As shown in FIG. **5A**, the magnesium alloy begins to show a great decrease in tensile strength at a temperature above 100°C; and at 150°C, it only has about 2/3 of the strength at room temperature. On the other hand, the tensile strength of the aluminum alloy does not show any great decrease until about 150°C, although gradually decreasing with increase in temperature. Therefore, when used as a structural member, a molding of the magnesium alloy would permit a narrower temperature range of use, although a lighter weight than that of the aluminum alloy would be attained. Particular attention must be paid to the decrease in strength when a molding of the magnesium alloy is exposed to a temperature of 100°C or above. According to experimentation by the inventors, the region of the seat frame **104** which is located close to the exhaust pipe **118** is heated at least to a temperature of 60°Cor above, and may occasionally reach 100°C to 150°C.

FIG. **5B** is a graph showing changes in strength, against different thicknesses, of moldings which are composed of a magnesium alloy or an aluminum alloy. Similarly to the graph of FIG. **5A**, magnesium alloy specimens and aluminum alloy specimens of the aforementioned compositions were used to obtain the data. The horizontal axis represents the thickness of each specimen. The vertical axis represents the strength per unit thickness of each specimen, where the strength under a thickness of 2 mm is defined as 100%. As shown in FIG. **5B**, when the specimen becomes thicker than 2 mm, the strength per unit thickness gradually lowers. The strength per unit thickness of a specimen with a thickness of 10 mm is reduced to about 63%. Although the changes in strength per unit thickness of the aluminum alloy show a similar tendency to that of the magnesium alloy, the aluminum alloy shows a smaller decrease in strength than does the magnesium alloy. Such decreases in strength are explained as follows.

In general, when a part is formed by molding, the injected melt begins to cool down and solidify from the outside, where the melt is in contact with the mold. Since the inside of the part begins to solidify after the outside of the part has solidified, voids (blow holes) due to condensation are likely to occur in the inside of the molding. As the part becomes thicker, the difference in temperature between the inside and the outside during solidification becomes greater, thus leading to more occurrences of voids. In particular, magnesium has a low specific heat, and therefore magnesium melt is prone to cool down. Therefore, when a magnesium alloy part is formed by molding, more voids will occur as the part becomes thicker, thus resulting in substantial deteriorations of strength per unit volume. Thus, it can be seen that an magnesium alloy is less refractory than an aluminum alloy, and that an magnesium alloy is more susceptible to strength deteriorations associated with part thickness.

As described earlier, the seat frame **104** supports a rider (and a passenger), and therefore needs to have a high mechanical strength as a whole. Therefore, the seat frame **104** is preferably formed integrally by a molding technique. In other words, the seat frame **104** must be composed of a magnesium alloy which have a composition suitable for molding techniques. In this case, however, the strength of any magnesium alloy part obtained through molding would decrease at a temperature of 100°C or above, as has been described with reference to FIGS. **5A** and **5B**. On the other hand, it would not be appropriate to increase the thickness of the parts composing the seat frame **104** for the sake of strength.

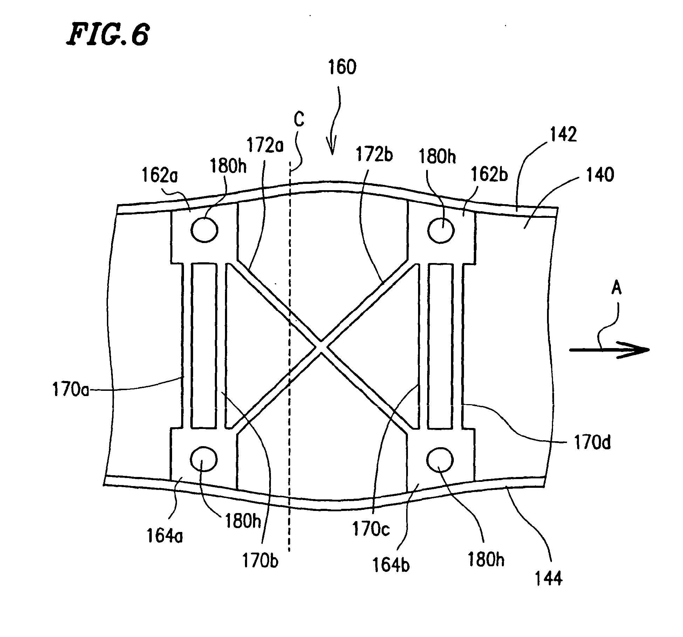

By taking the above facts into consideration, the supporting structure **160** for supporting the footrests **145** includes rib structures to realize a good heat-releasing ability and a high strength. FIG. **6** is an enlarged plan view showing the neighborhood of the supporting structure **160** of the seat frame **104**. The supporting structure **160** includes a pair of first bases **162a** and **162b** and a pair of second bases **164a** and **164b**, all of which are provided on the bottom section **104**. Each of the first bases **162a** and **162b** and the second bases **164a** and **164b** has an engaging portion for being connected to the right or left footrest **145**. In the present embodiment, a throughhole **180h** is provided as an engaging portion in each of the first bases **162a** and **162b** and the second bases **164a** and **164b**.

The first bases (**162a** and **162b**) and the second bases (**164a** and **164b**) are disposed at both ends along a direction perpendicular to the longitudinal direction of the bottom section **140**. The interspace between the first bases **162a** and **162b** and the interspace between the second bases **164a** and **164b** are each equal to the interspace between the screw holes **145a** provided in each footrest **145**.

The supporting structure **160** has first ribs **170a**, **170b**, **170c** and **170d**, and second ribs **172a** and **172b**, which are provided on the bottom section **140**. The first ribs **170a** and **170b** connect the first base **162a** to the second base **164a** (which opposes the first base **162a** along a direction perpendicular to the longitudinal direction **A**). The first ribs **170c** and **170d** connect the first base **162b** to the second base **164b** (which opposes the first base **162b** along the direction perpendicular to the longitudinal direction **A**). The first ribs **170a**, **170b**, **170c** and **170d** are disposed approximately in parallel to one another. The second ribs **172a** and **172b** intersect each other. The second rib **172a** connects between the first base **162a** and the second base **164b**, which are diagonal to each other. The second rib **172b** connects between the first base **162b** and the second base **164a**, which are diagonal to each other.

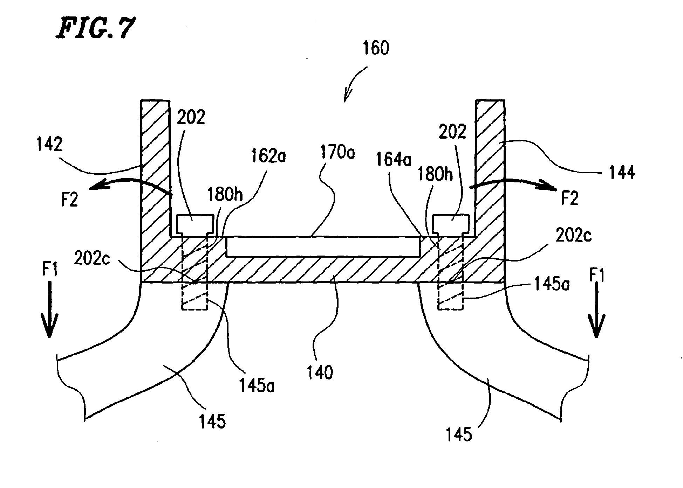

FIG. **7** schematically shows a cross-sectional structure taken along a line extending through the first base **162a** and the second base **164a**. As shown in FIG. **7**, when a person seated on the passenger's seat rests his or her feet on the tips of the footrests **145**, a downward force **F1** associated with the person's weight is applied on the tip of each footrest **145** (as indicated by arrows **F1**). These forces are applied to the first base **162a** and the second base **164a**, which are engaged to the footrests **145**, as well as to the first base **162b** and the second base **164b** (which are omitted from FIG. **7** because they are in overlapping positions). In the present embodiment, the screw holes **145a** are provided in the footrests **145** so as to serve as engaging portions, and therefore bolts are engaged in the screw holes **145a** for fastening the footrests **145** to the first bases **162a** and **162b** and the second bases **164a** and **164b**. Thus, the forces **F1** will act on the first bases **162a** and **162b** and the second bases **164a** and **164b**.

In a plane which is perpendicular to the longitudinal direction of the seat frame **104**, the position at which each force **F1** acts is located outside (with respect to the center of the seat frame **104**) of the position at which each footrest **145** is supported by the bottom section **140** of the seat frame **104**. Therefore, each base receives a force **F2** to cause a rotation (in a plane which is perpendicular to the longitudinal direction **A** of the seat frame **104**) around a point **202c** at which the axis of a bolt **202** intersects the interface between each base and the footrest **145**. In other words, the forces **F2** applied on the first bases **162a** and **162b** and the second bases **164a** and **164b** act to push apart the first base **162a** and the second base **164a**.

However, since the first ribs **170a**, **170b**, **170c** and **170d** and the second ribs **172a** and **172b** connect the first bases **162a** and **162b** to the second bases **164a** and **164b**, the seat frame **104** has a high strength against deformation or rupture due to the forces **F2**. As a result, even if the temperature of the supporting structure **160** for supporting the footrests **145** becomes so high that the strength of the magnesium alloy composing the seat frame **104** may be lowered, a predetermined level of strength or above is maintained, whereby deformation of the seat frame **104** is prevented. Moreover, since the intersecting second ribs **172a** and **172b** connect between diagonal bases, twisting deformations in the regions of the bottom section where the first bases **162a** and **162b** and the second bases **164a** and **164b** are also prevented.

Furthermore, since at least one rib is provided in the supporting structure **160**, the supporting structure **160** has an increased surface area, which results in an increased amount of heat radiation from the surface. Therefore, heat is prevented from being stored in the supporting structure **160** to cause temperature increases, and thus deterioration in strength due to temperature increases can be suppressed.

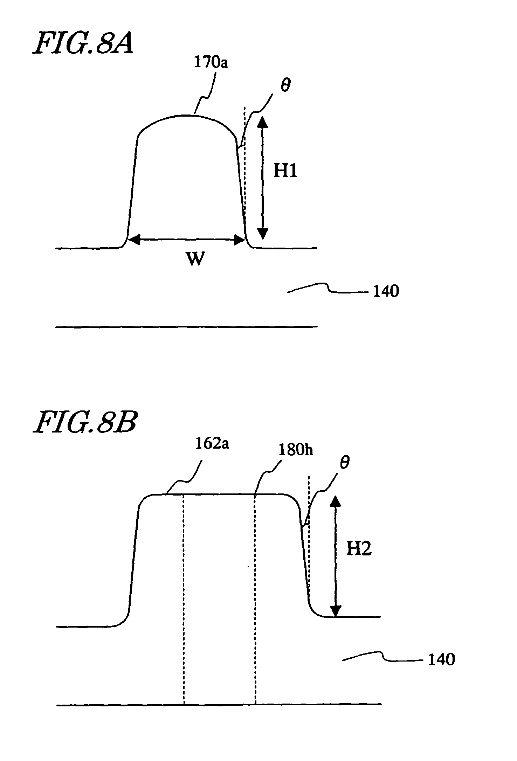

FIGS. **8A** and **8B** show cross sections of the first rib **170a** and the first base **162a**, respectively. In order to prevent deformation of the seat frame **104** due to a load applied to the footrests **145**, it is preferable that each rib has a high strength against tensile stress. However, as a magnesium alloy part which is obtained by molding becomes thicker, the part will experience a greater deterioration of strength per unit thickness due to voids which occur during cooling, as has been described with reference to FIG. **5B**. Therefore, each rib preferably has a small thickness W. Accordingly, it is preferable that the supporting structure **160** includes a plurality of ribs having a small thickness W. Specifically, the thickness W is preferably 4 mm or less. In particular, if the thickness W is about 2 mm, hardly any deterioration in strength per unit thickness will occur so that the resultant ribs will have a high tensile strength, and even at the intersections between ribs, the thickness will be about 4 mm or less and therefore deterioration in strength per unit thickness can be suppressed. Since it is difficult to form any motorcycle part that is thinner than 2 mm by die-casting, the thickness W of each rib is preferably 2 mm or more. On the other hand, each rib preferably has a high height **H1** in order to provide a higher rib strength as well as a broader rib lateral area, which will result in enhanced radiation effects. However, excessively high ribs will result in poor mold releasability, and permit less space for accommodating control circuits and/or electrical parts of the motorcycle, if such elements are to be accommodated within the seat frame. For these reasons, the height **H1** is preferably no less than 2 mm and no more than 4 mm. Moreover, a height **H2** of the base is preferably no less than 2 mm and no more than 4 mm. Preferably, the side faces of each rib or base have a gradient θ of about 1.5° for facilitating die release.

The number of ribs will depend on the size of the bases, the interspace between the first bases **162a** and **162b** and the second bases **164a** and **164b**, the magnitude of the load which is applied to the footrests **145**, and the like. However, in order to increase the amount of heat radiation, the supporting structure **160** preferably has a sufficient number of ribs such that the region of the bottom section **140** where the supporting structure **160** is provided has a surface area which is at least twice as large as that in the case where the supporting structure **160** is not provided. For enhanced radiation effects, as shown in FIG. **3**, the seat frame **104** may be connected to the main frame **110** in such a manner that external air **W1** will flow into the internal space which is defined by the side wall sections **142** and **144** and the bottom section **140** of the seat frame **104**, during travel of the motorcycle **100**. Moreover, in the bottom section **140** or the side wall sections **142** and **144**, an opening(s) **140h** may be provided near the base **154** to allow external air to flow through the opening(s) into the internal space, as indicated by an arrow **W2**. By adopting any such structure, cold external air will flow near the supporting structure **160** during travel of the motorcycle **100**, and the air that has been heated due to radiation will move away from the supporting structure **160**. This will result in further enhanced radiation effects, and efficiently prevent the supporting structure **160** from reaching a high temperature.

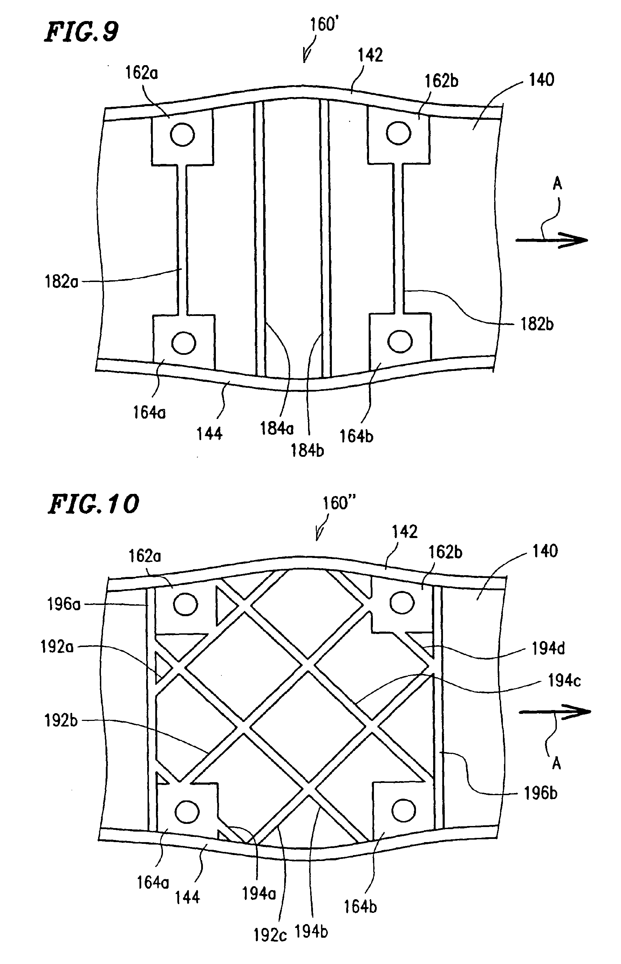

As described above, the ribs only need to connect between the first bases **162a** and **162b** and the second bases **164a** and **164b**, and the seat frame **104** may have a supporting structure of any shape other than that of the supporting structure **160** as shown in FIG. **6**. For example, the seat frame **104** may have a supporting structure **160'** as shown in FIG. **9**. The supporting structure **160'** includes first ribs **182a** and **182b** and second ribs **184a** and **184b**, which are provided on the bottom section **140**.

Similarly to the supporting structure **160** of FIG. **6**, the first ribs **182a** and **182b** connect between the first bases **162a** and **162b** and the second bases **164a** and **164b**, thus providing the seat frame **104** with mechanical strength. On the other hand, the second ribs **184a** and **184b**, which are provided on the bottom section **140**, connect between the side wall sections **142** and **144**. The second ribs **184a** and **184b** prevent the side wall sections **142** and **144** from being deformed and pushed outward due to the load applied to the footrests **145**.

The first ribs **182a** and **182b** and the second ribs **184a** and **184b** increase the surface area of the region surrounded by the first bases **162a** and **162b** and the second bases **164a** and **164b**. As a result, the amount of heat radiation from the surface is increased, whereby the heat which is radiated from the exhaust pipe **118** is prevented from being stored in the bottom section **140** of the seat frame **104** to increase the temperature of the bottom section **140.**

Alternatively, the seat frame **104** may have a supporting structure **160"** as shown in FIG. **10**. The supporting structure **160"** includes first ribs **192a**, **192b**, **192c**, **194a**, **194b**, **194c** and **194d,** and second ribs **196a** and **196b**, which are provided on the bottom section **140**. The second ribs **196a** and **196b** extend along a direction perpendicular to the longitudinal direction **A**, in such a manner that the first bases **162a** and **162b** and the second bases **164a** and **164b** are interposed therebetween. In the region interposed between the second ribs **196a** and **196b**, the first ribs **192a**, **192b**, **192c**, **194a**, **194b**, **194c** and **194d** are disposed so as to present a mesh shape or a waffle-like shape. Specifically, the direction in which the first ribs **192a**, **192b** and **192c** is different from the direction in which the first ribs **194a**, **194b** and **194c** extend, and each of these directions traverses (i.e., is not parallel to) the longitudinal direction **A**. Thus, the first ribs **192a**, **192b** and **192c** intersect the first ribs **194a**, **194b** and **194c**. Preferably, the first ribs **192a**, **192b**, **192c**, **194a**, **194b**, **194c** and **194d** and the second ribs **196a** and **196b** are provided on the bottom section **140** in such a manner that each base is connected to at least one rib.

In accordance with the supporting structure **160"**, a plurality of ribs are formed in a mesh shape, such that each base is connected to at least one rib. Thus, the first bases **162a** and **162b** are connected to the second bases **164a** and **164b** via the mesh-shaped ribs. As a result, the mechanical strength of the seat frame **104** are enhanced.

In the supporting structures **160'** and **160"**, each base has at least one rib connected thereto. However, the forces due to the load which is applied to the footrests **145** will not act on the bases alone, but rather in the entire region of the bottom section **140** where the supporting structure **160'** is provided. Therefore, so long as at least one rib extending in a direction which traverses the longitudinal direction **A** is formed in the region of the bottom face **140** where the supporting structure **160'** is formed, some improvement in the strength of the supporting structure can be obtained, even if that rib is not connected to any of the bases. In this case, the rib extending in a direction which traverses the longitudinal direction **A** does not need to extend all the way across the width of the bottom section **140** to connect between the side wall sections **142** and **144**.

Next, a method for producing the seat frame **104** will be described. Preferably, the seat frame **104** having the above-described features is formed by molding. In particular, in order to obtain an enhanced mechanical strength, it is preferable that the respective elements in the seat frame **104** be formed integrally.

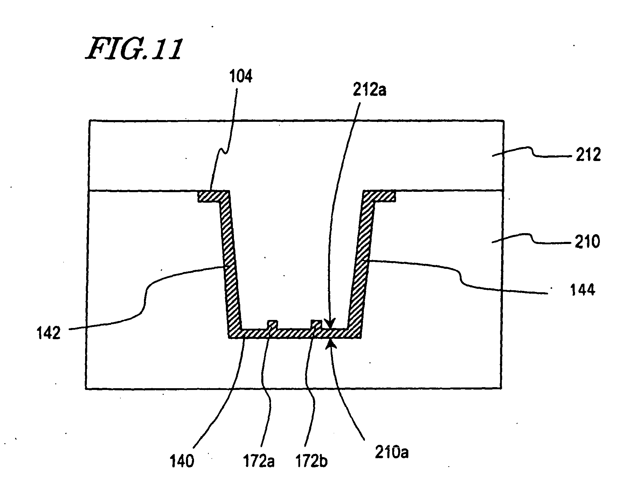

FIG. **11** is a cross-sectional view showing examples of molds **210** and **212** for forming the seat frame **104** by molding. FIG. **11** shows a cross section of the molds **210** and **212** along a broken line **C** in FIG. **6**.

As shown in FIG. **11**, the seat frame **104** is preferably formed by a die-cast technique that employs the molds **210** and **212,** which are split at a plane which is parallel to the bottom section **140** to result in mold surfaces **210a** and **212a**, respectively, for molding the two principal faces of the bottom section **140**. A pattern which defines the supporting structure **160** having the bases and ribs as specifically described above is formed in the mold surface **212a** of the mold **212**.

In order to form the seat frame **104** by molding, the seat frame **104** is preferably composed of a magnesium alloy which has a low viscosity in a melted state. Although a small amount of calcium or a rare-earth element may be contained for improved refractoriness, the viscosity of the melt will increase with increased additives, thus making it difficult to form the seat frame **104** by molding. Specifically, the seat frame **104** is preferably composed of an Mg-Al-Mn alloy, and the amount of additional calcium or rare-earth element is 0.1wt% or less. In particular, it is preferable to use an Mg-Al-Mn alloy which contains no less than 3wt% and no more than 8wt% of Al and contains no less than 0.1wt% and no more than 6wt% of Mn, because excellent strength and drawability will be obtained. For example, AM60B alloy according to the ATSM standard can be suitably used.

As the molding method, it is preferable to use a high pressure die-cast technique which employs a die and injects melt at a high pressure, because it provides high dimension precision and is suitable for mass production.

Thus, the seat frame according to the present invention is integrally formed from a magnesium alloy, by using a molding technique. Therefore, the seat frame as a whole has a high mechianical strength, such that the seat frame will not be deformed under the weight of a rider and/or a passenger seated in the rider's seat and/or the passenger's seat. In portions of the seat frame which will be subjected to a high temperature, structures for realizing sufficient strength even in the case where the strength of the magnesium alloy itself decreases due to high temperature are provided. Specifically, in each cylindrical stay for supporting a muffler, ribs are provided around an opening so as to realize enhanced strength and heat-releasing ability. Moreover, a supporting structure for supporting footrests for the passenger, which is provided in a region of the seat frame that is close to an exhaust pipe, includes bases and a plurality of ribs for linking the bases. As a result, even if the strength of the magnesium alloy composing then seat frame decreases under a high temperature, the ribs serve to present deformation due to a load applied to the footrests. Moreover, the ribs make for an increased surface area of the supporting structure for supporting the footrests, thus realizing an enhanced heat-releasing ability. As a result, heat is prevented from being stored near the supporting structure to cause temperature increases. In embodiments where external air is allowed to flow into the internal space of the seat frame during travel, radiation effects by the ribs can be further enhanced.

Thus, a motorcycle according to the present teaching, which includes a seat frame that has a high strength and excellent refractoriness and is light-weighted, provides excellent running properties and vehicle stability.

The seat frame and the supporting structure for the footrests which have been illustrated in the present embodiment are only exemplary. It will be appreciated that the seat frame and the supporting structure may have any shape other than those illustrated in the figures. Moreover, the number of bases and ribs to be provided in the supporting structure are not limited to those described in the present embodiment.

For example, although the seat frame of the present embodiment has a generally flat bottom section, the bottom section may alternatively be curved. In this case, the pair of side wall sections extending from the bottom section may also be curved, such that the bottom section and the side wall sections constitute a continuous arc in a cross section which is perpendicular to the longitudinal direction of the seat frame. In this case, each rib may be curved along the curved bottom section while maintaining an equal height along its longitudinal direction, or may have varying heights along its longitudinal direction so as to have a flat or level upper end.

Each footrest is illustrated as having two engaging portions and being affixed to the seat frame at two positions. However, the number of engaging portions provided on the footrests may be one, or three or more. In this case, the seat frame may have as many bases as there are engaging potions in each footrest.

The exhaust pipe is illustrated as being split into two portions sandwiching the seat frame, with a muffler being connected to each split portion. However, the exhaust pipe does not need to be split, and may be connected to a single muffler. In this case, only one stay for supporting the muffler needs to be provided on the seat frame.

In the present embodiment, the bases of the supporting structure are used for attaching footrests to the seat frame. However, the bases may be attachment sections for attaching any other load-bearing parts to the seat frame, besides footrests.

The present teaching is suitably used for a motorcycle. In particular, the present teaching is suitably used for a motorcycle having good mileage and/or good running properties.

## Claims

1. A motorcycle rear frame for supporting a rider's seat, comprising:
a bottom section (140) extending in a longitudinal direction (A), and side wall sections (142, 144) extending along the longitudinal direction (A) and being provided on the bottom section (140) in such a manner that the bottom section (140) is interposed therebetween;
at least one first base (162a,162b), each having an engaging portion for supporting at least one load-bearing part (145), and at least one second base (164a,164b), each having an engaging portion for supporting at least one load-bearing part (145);
**characterized in that**
the motorcycle rear frame is composed of magnesium alloy,
the at least one first base (162a,162b) is formed integrally with the bottom section (140),
the at least one second base (164a,164b) is formed integrally with the bottom section (140), and
the motorcycle rear frame further comprises at least one first rib (170a to 170d) provided on the bottom section (140) and extending in a direction which traverses the longitudinal direction, the rib (170a to 170d) connecting between the at least one first base (162a, 162b) and the at least one second base (164a,164b).

2. The motorcycle rear frame of claim 1, **characterized in that** the load-bearing part is a footrest (145) for a passenger, and the engaging portion of the first base (162a,162b) and the engaging portion of the second base (164a,164b) support a pair of the footrests (145) for the passenger.

3. The motorcycle rear frame of claim 1 or 2, **characterized by** further comprising two first bases (162a,162b), two second bases (164a,164b), and a plurality of said first ribs (170a to 170d), wherein, the plurality of first ribs (170a to 170d) are provided on the bottom section (140) so as to extend in a direction which is perpendicular to the longitudinal direction, each of the plurality of first ribs (170a to 170d) connecting between one of the first bases (162a,162b) and one of the second bases (164a,164b) that opposes the first base (162a,162b) along the direction which is perpendicular to the longitudinal direction.

4. The motorcycle rear frame of claim 1 or 2, **characterized by** further comprising two first bases (162a,162b), two second bases (164a,164b), and a pair of second ribs (172a,172b), wherein the pair of second ribs (172a,172b) connect between one of the first bases (162a,162b) and one of the second bases (164a,164b) that are disposed diagonally from each other, the pair of second ribs (172a,172b) intersecting each other.

5. The motorcycle rear frame of claim 3, **characterized by** further comprising:
a pair of side wall sections (142,144) between which the bottom section (140) is interposed; and
at least one second rib (184a,184b) provided on the bottom section (140), wherein the second rib (184a,184b) extends in a direction which is perpendicular to the longitudinal direction, the second rib (184a, 184b) connecting between the pair of side wall sections (142,144).

6. The motorcycle rear frame of claim 1 or 2, **characterized by** further comprising two first bases (162a,162b), two second bases (164a,164b), and a plurality of ribs (192a to 192c, 194a to 194d) including said first rib, wherein the plurality of ribs (192a to 192c, 194a to 194d) are disposed in a mesh shape, each of the first and second bases (162a,162b,164a,164b) being connected to at least one of the plurality of ribs (192a to 192c, 194a to 194d).

7. The motorcycle rear frame of any of claims 1 to 4 and 6, **characterized by** further comprising a pair of side wall sections (142,144) between which the bottom section (140) is interposed.

8. The motorcycle rear frame of claim 5 or 7, **characterized by** further comprising at least one cylindrical stay (152) provided on the pair of side wall sections (142,144), the cylindrical stay having an aperture for affixing an exhaust pipe to the motorcycle rear frame, the cylindrical stay (152) having a rib (152b) around an opening of the cylindrical shape of the stay.

9. The motorcycle rear frame of claim 8, **characterized by** further comprising on the bottom section (140) a third base (154) having an engaging portion for supporting the exhaust pipe, wherein a region (160) of the bottom section (140) where the first base (162,162b) and the second base (164a,164b) are provided is located between the third base (154) and the cylindrical stay (152).

10. The motorcycle rear frame of claim 9, **characterized in that** the region (160) of the bottom section (140) where the first base (162a,162b) and the second base (164a,164b) are provided is heated to a temperature of no less than 100°C and no more than 150°C.

11. The motorcycle rear frame of claim 10, **characterized by** further comprising an opening (140h) provided in the pair of side wall sections (142,144) or the bottom section (140).

12. The motorcycle rear frame of claim 1, **characterized in that** the first rib (170a to 170d) has a thickness of no less than 2 mm and no more than 4 mm, and a height of no less than 2 mm and no more than 4 mm.

13. The motorcycle rear frame of claim 6, **characterized in that** the plurality of ribs (192a to 192c, 194a to 194d) each have a thickness of no less than 2 mm and no more than 4 mm, and a height of no less than 2 mm and no more than 4 mm.

14. The motorcycle rear frame of any of claims 1 to 13, **characterized in that** the magnesium alloy has a calcium or rare-earth element content of 0.1 weight% or less.

15. The motorcycle rear frame of claim 14, **characterized in that** the magnesium alloy is an Mg-Al-Mn alloy.

16. The motorcycle rear frame of any of claims 1 to 15, **characterized in that** the motorcycle rear frame is formed by a molding technique.

17. A motorcycle comprising:
a main frame (102);
an internal combustion engine (108) supported by the main frame (102);
the motorcycle rear frame (104) of any of claims 1 to 16, the motorcycle rear frame (104) being connected to the main frame (102);
an exhaust pipe (118) connected to the internal combustion engine (108); and
a muffler (120) connected to an end of the exhaust pipe (118), wherein the exhaust pipe (118) is supported by the motorcycle rear frame (104) so as to be close to a region (160) of the bottom section (140) where the first base (162a,162b) and the second base (164a,164b) are provided.

18. The motorcycle of claim 17, **characterized in that** the motorcycle rear frame (104) is connected to the main frame (102) in such a manner that, during travel, air is allowed to flow into an internal space defined by the pair of side wall sections (142,144) and the bottom section (140).

19. A method for producing the motorcycle rear frame of any of claims 1 to 13, the motorcycle rear frame (104) is formed by a die-cast technique **characterized in that** the motorcycle rear frame (104) is formed using a pair of molds (210, 212) each having a surface (210a, 212a) for forming one or two principal faces of the bottom section (140).

20. The method of claim 19, **characterized in that** the motorcycle rear frame is formed by using a magnesium alloy which has a calcium or rare-earth element content of 0.1 weight% or less.

21. The method of claim 20, **characterized in that** the magnesium alloy is an Mg-Al-Mn alloy.

## Patentansprüche

1. Hinterrahmen eines Motorrades, um einen Sitz des Fahrers zu tragen, aufweisend:
einen Bodenabschnitt (140), der sich in einer Längsrichtung (A) erstreckt, und Seitenwandabschnitte (142, 144), die sich entlang der Längsrichtung (A) erstrecken und die an dem Bodenabschnitt (140) vorgesehen sind in solch einer Weise, dass der Bodenabschnitt (140) dazwischen eingesetzt ist;
zumindest eine erste Basis (162a, 162b), die jede einen Eingriffsabschnitt hat, um zumindest ein Lastlagerteil (145) zu tragen, und zumindest eine zweite Basis (164a, 164b), die jede einen Eingriffsabschnitt hat, um zumindest ein Lastlagerteil (145) zu tragen;
**dadurch gekennzeichnet, dass**
die zumindest eine erste Basis (162a, 162b) mit dem Bodenabschnitt (140) einstückig gebildet ist,
die zumindest eine zweite Basis (164a, 164b) mit dem Bodenabschnitt (140) einstückig gebildet ist,
der Hinterrahmen des Motorrades außerdem aufweist zumindest eine erste Rippe (170a bis 170d), vorgesehen auf dem Bodenabschnitt (140) und die sich in eine Richtung erstreckt, die die Längsrichtung kreuzt, wobei die Rippe (170a bis 170d) zwischen der zumindest einen ersten Basis (162a, 162b) und der zumindest einen zweiten Basis (164a, 164b) verbindet.

2. Hinterrahmen eines Motorrades nach Anspruch 1, **dadurch gekennzeichnet, dass** das Lasttrageteil eine Fußstütze (145) für einen Passagier ist und der Eingriffsabschnitt der ersten Basis (162a, 162b) und der Eingriffsabschnitt der zweiten Basis (164a, 164b) ein Paar der Fußstützen (145) für den Passagier tragen.

3. Hinterrahmen eines Motorrades nach Anspruch 1 oder 2, **gekennzeichnet durch** außerdem aufweisend zwei erste Basen (162a, 162b), zwei zweite Basen (164a, 164b) und eine Mehrzahl der Rippen (170a bis 170d), wobei die Mehrzahl der ersten Rippen (170a bis 170d) an dem Bodenabschnitt (140) vorgesehen ist, um sich in eine Richtung zu erstrecken, die zu der Längsrichtung rechtwinklig ist, wobei jede der Mehrzahl der ersten Rippen (170a bis 170d) zwischen einer der ersten Basen (162a, 162b) und einer der zweiten Basen (164a, 164b) verbindet, die der ersten Basis (162a, 162b) entlang der Richtung, die zu der Längsrichtung rechtwinklig ist, gegenüberliegt.

4. Hinterrahmen eines Motorrades nach Anspruch 1 oder 2, **gekennzeichnet durch** außerdem aufweisend zwei erste Basen (162a, 162b), zwei zweite Basen (164a, 164b) und ein Paar von zweiten Rippen (172a bis 172b), wobei das Paar von zweiten Rippen (172a bis 172b) zwischen einer der ersten Basen (162a, 162b) und einer der zweiten Basen (164a, 164b), die zueinander diagonal sind, verbindet, wobei das Paar der zweiten Rippen (172a bis 172b) einander schneidet.

5. Hinterrahmen eines Motorrades nach Anspruch 3, **gekennzeichnet durch** außerdem aufweisend:
ein Paar von Seitenwandabschnitten (142, 144), zwischen denen der Bodenabschnitt (140) eingesetzt ist; und
zumindest eine zweite Rippe (184a bis 184b), vorgesehen an dem Bodenabschnitt (140), wobei sich die zweite Rippe (184a bis 184b) in eine Richtung erstreckt, die zu der Längsrichtung rechtwinklig ist, wobei die zweite Rippe (184a bis 184b) zwischen dem Paar von Seitenwandabschnitten (142, 144) verbindet.

6. Hinterrahmen eines Motorrades nach Anspruch 1 oder 2, **gekennzeichnet durch** außerdem aufweisend zwei erste Basen (162a, 162b), zwei zweite Basen (164a, 164b) und eine Mehrzahl von Rippen (192a bis 192c, 194a bis 194d), die die erste Rippe enthalten, wobei die Mehrzahl der Rippen (192a bis 192c, 194a bis 194d) in einer Netzform angeordnet ist, jede der ersten und zweiten Basen (162a, 162b, 164a, 164b) mit zumindest einer der Mehrzahl der Rippen (192a bis 192c, 194a bis 194d) verbunden ist.

7. Hinterrahmen eines Motorrades nach einem der Ansprüche 1 bis 4 und 6, **gekennzeichnet durch** außerdem aufweisend ein Paar von Seitenwandabschnitten (142, 144), zwischen denen die Bodenabschnitte (140) eingesetzt sind.

8. Hinterrahmen eines Motorrades nach Anspruch 5 oder 7, **gekennzeichnet durch** außerdem aufweisend zumindest eine zylindrische Strebe (152), vorgesehen an dem Paar von Seitenwandabschnitten (142, 144), wobei die zylindrische Strebe eine Öffnung hat, um ein Abgasrohr an dem Hinterrahmen des Motorrades zu befestigen, die zylindrische Strebe (152) ein Rippe (152b) rund um eine Öffnung der Zylinderform der Strebe hat.

9. Hinterrahmen eines Motorrades nach Anspruch 8, **gekennzeichnet durch** außerdem aufweisend an dem Bodenabschnitt (140) eine dritte Basis ((154) mit einem Eingriffsabschnitt zum Lagern des Abgasrohres, wobei ein Bereich (160) des Bodenabschnittes (140), wo die erste Basis (162a, 162b) und die zweite Basis (164a, 164b) angeordnet sind, zwischen der dritten Basis (154) und der zylindrische Strebe (152) angeordnet ist.

10. Hinterrahmen eines Motorrades nach Anspruch 9, **dadurch gekennzeichnet, dass** der Bereich (160) des Bodenabschnittes (140), wo die erste Basis (162a, 162b) und die zweite Basis (164a, 164b) angeordnet sind, auf eine Temperatur von nicht niedriger als 100° C und nicht höher als 150° C erwärmt wird.

11. Hinterrahmen eines Motorrades nach Anspruch 10, **gekennzeichnet durch** außerdem aufweisend eine Öffnung (140h), vorgesehen in dem Paar von Seitenwandabschnitten (142, 144) oder dem Bodenabschnitt (140).

12. Hinterrahmen eines Motorrades nach Anspruch 1, **dadurch gekennzeichnet, dass** die erste Rippe (170a bis 170d) eine Dicke von nicht weniger als 2 mm und nicht mehr als 4 mm und eine Höhe von nicht weniger als 2mm und nicht mehr als 4 mm hat.

13. Hinterrahmen eines Motorrades nach Anspruch 6, **dadurch gekennzeichnet, dass** die Mehrzahl von Rippen (192a bis 192c, 194a bis 194d) jeweils eine Dicke von nicht mehr als 2 mm und nicht mehr als 4 mm und eine Höhe von nicht weniger als 2mm und nicht mehr als 4 mm hat.

14. Hinterrahmen für ein Motorrad nach einem der Ansprüche 1 bis 13, **dadurch gekennzeichnet, dass** die Magnesiumlegierung einen Gehalt von Kalzium oder Element seltener Erden von 0,1 Gew.-% oder weniger hat.

15. Hinterrahmen eines Motorrades nach Anspruch 14, **dadurch gekennzeichnet, dass** die Magnesiumlegierung eine Mg- Al- Mn- Legierung ist.

16. Hinterrahmen eines Motorrades nach einem der Ansprüche 1 bis 15, **dadurch gekennzeichnet, dass** der Hinterrahmen des Motorrades durch eine Gießtechnologie gebildet ist.

17. Motorrad, aufweisend:
einen Hauptrahmen (102);
eine Brennkraftmaschine (108), gelagert durch den Hauptrahmen (102);
den Hinterrahmen (104) des Motorrades nach einem der Ansprüche 1 bis 6, wobei der Hinterrahmen (104) des Motorrades mit dem Hauptrahmen (102) verbunden ist;
ein Abgasrohr (118), verbunden mit der Brennkraftmaschine (108); und
einen Schalldämpfer (102), verbunden mit einem Ende des Abgasrohres (118), wobei das Abgasrohr (118) durch den Hinterrahmen (104) des Motorrades gelagert ist, um nahe zu einem Bereich (160) des Bodenabschnittes (140) zu sein, wo die erste Basis (162a, 162b) und die zweite Basis (164a, 164b) angeordnet sind.

18. Motorrad nach Anspruch 17, **dadurch gekennzeichnet, dass** der Hinterrahmen (104) des Motorrades mit dem Hauptrahmen (102) verbunden ist derart, dass während der Fahrt Luft, in einen Innenraum einströmen kann, gebildet durch das Paar von Seitenwandabschnitten (142, 144) und dem Bodenabschnitt (140).

19. Verfahren zum Herstellen des Hinterrahmens des Motorrades nach einem der Ansprüche 1 bis 13, wobei der Hinterrahmen (104) des Motorrades durch eine Formgusstechnologie gebildet wird, **dadurch gekennzeichnet, dass** der Hinterrahmen (104) des Motorrades unter Verwendung eines Formenpaares (210, 212) gebildet wird, von denen jeder eine Oberfläche (210a, 212a) hat, um ein oder zwei Hauptflächen des Bodenabschnittes (140) zu bilden.

20. Verfahren nach Anspruch 19, **dadurch gekennzeichnet, dass** der Hinterrahmen des Motorrades gebildet wird unter Verwendung einer Magnesiumlegierung, die einen Gehalt von Kalzium oder seltener Erden von 0,1 Gew.-% oder weniger hat.

21. Verfahren nach Anspruch 20, **dadurch gekennzeichnet, dass** die Magnesiumlegierung eine Mg- Al- Mn- Legierung ist.

## Revendications

1. Cadre arrière de moto pour supporter un siège de pilote, comprenant :
une section de fond (140) s'étendant dans une direction longitudinale (A), et des sections de paroi latérales (142, 144) s'étendant le long de la direction longitudinale (A) et prévues sur la section de fond (140) de manière à ce que la section de fond (140) soit interposée entre celles-ci ;
au moins une première base (162a, 162b), comportant chacune une partie de mise en prise pour supporter au moins une partie de support de charge (145), et au moins une deuxième base (164a, 164b), comportant chacune une partie de mise en prise pour supporter au moins une partie de support de charge (145) ;
**caractérisé en ce que**
le cadre arrière de moto est composé d'un alliage de magnésium,
ladite au moins une première base (162a, 162b) est formée d'un seul tenant avec la section de fond (140),
ladite au moins une deuxième base (164a, 164b) est formée d'une seul tenant avec la section de fond (140), et
le cadre arrière de moto comprend en outre au moins une première nervure (170a à 170d) prévue sur la section de fond (140) et s'étendant dans une direction qui croise la direction longitudinale, la nervure (170a à 170d) établissant une liaison entre ladite au moins une première base (162a, 162b) et ladite au moins une deuxième base (164a, 164b).

2. Cadre arrière de moto selon la revendication 1, **caractérisé en ce que** la partie de support de charge est un repose-pieds (145) pour un passager, et la partie de mise en prise de la première base (162a, 162b) et la partie de mise en prise de la deuxième base (164a, 164b) supportent deux repose-pieds (145) pour le passager.

3. Cadre arrière de moto selon la revendication 1 ou 2, **caractérisé en ce qu'**il comprend en outre deux premières bases (162a, 162b), deux deuxièmes bases (164a, 164b), et une pluralité desdites premières nervures (170a à 170d), dans lequel, la pluralité de premières nervures (170a à 170d) sont prévues sur la section de fond (140) de manière à s'étendre dans une direction qui est perpendiculaire à la direction longitudinale, chacune de la pluralité de premières nervures (170a à 170d) établissant une liaison entre l'une des premières bases (162a, 162b) et l'une des deuxièmes bases (164a, 164b) qui fait face à la première base (162a, 162b) le long de la direction qui est perpendiculaire à la direction longitudinale.

4. Cadre arrière de moto selon la revendication 1 ou 2, **caractérisé en ce qu'**il comprend en outre deux premières bases (162a, 162b), deux deuxièmes bases (164a, 164b), et deux deuxièmes nervures (172a, 172b), dans lequel les deux deuxièmes nervures (172a, 172b) établissent une liaison entre l'une des premières bases (162a, 162b) et l'un des deuxièmes bases (164a, 164b) qui sont disposées en diagonale l'une par rapport à l'autre, les deux deuxièmes nervures (172a, 172b) se croisant l'une l'autre.

5. Cadre arrière de moto selon la revendication 3, **caractérisé en ce qu'**il comprend en outre :
deux sections de paroi latérales (142, 144) entre lesquelles la section de fond (140) est interposée ; et
au moins une deuxième nervure (184a, 184b) prévue sur la section de fond (140), dans lequel la deuxième nervure (184a, 184b) s'étend dans une direction qui est perpendiculaire à la direction longitudinale, la deuxième nervure (184a, 184b) établissant une liaison entre les deux sections de paroi latérales (142, 144).

6. Cadre arrière de moto selon la revendication 1 ou 2, **caractérisé en ce qu'**il comprend en outre deux premières bases (162a, 162b), deux deuxièmes bases (164a, 164b), et une pluralité de nervures (192a à 192c, 194a à 194d) comprenant ladite première nervure, dans lequel la pluralité de nervures (192a à 192c, 194a à 194d) sont disposées en une forme en treillis, chacune des premières et deuxièmes bases (162a, 162b, 164a, 164b) étant reliée à au moins l'une de la pluralité de nervures (192a à 192c, 194a à 194d).

7. Cadre arrière de moto selon l'une quelconque des revendications 1 à 4 et 6, **caractérisé en ce qu'**il comprend en outre deux sections de paroi latérales (142, 144) entre lesquelles la section de fond (140) est interposée.

8. Cadre arrière de moto selon la revendication 5 ou 7, **caractérisé en ce qu'**il comprend en outre au moins un support cylindrique (152) prévu sur les deux sections de paroi latérales (142, 144), le support cylindrique comportant une ouverture pour fixer un tuyau d'échappement au cadre arrière de moto, le support cylindrique (152) comportant une nervure (152b) autour d'une ouverture de la forme cylindrique du support.

9. Cadre arrière de moto selon la revendication 8, **caractérisé en ce qu'**il comprend en outre, sur la section de fond (140), une troisième base (154) comportant une partie de mise en prise pour supporter le tuyau d'échappement, dans lequel une région (160) de la section de fond (140) où la première base (162a, 162b) et la deuxième base (164a, 164b) sont prévues est située entre la troisième base (154) et le support cylindrique (152).

10. Cadre arrière de moto selon la revendication 9, **caractérisé en ce que** la région (160) de la section de fond (140) où la première base (162a, 162b) et la deuxième base (164a, 164b) sont prévues est chauffée à une température qui n'est pas inférieure à 100 °C et qui n'est pas supérieure à 150 °C.

11. Cadre arrière de moto selon la revendication 10, **caractérisé en ce qu'**il comprend en outre une ouverture (140h) prévue dans les deux sections de paroi latérales (142, 144) ou dans la section de fond (140).

12. Cadre arrière de moto selon la revendication 1, **caractérisé en ce que** la première nervure (170a à 170d) a une épaisseur qui n'est pas inférieure à 2 mm et qui n'est pas supérieure à 4 mm, et une hauteur qui n'est pas inférieure à 2 mm et qui n'est pas supérieure à 4 mm.

13. Cadre arrière de moto selon la revendication 6, **caractérisé en ce que** la pluralité de nervures (192a à 192c, 194a à 194d) ont une épaisseur qui n'est pas inférieure à 2 mm et qui n'est pas supérieure à 4 mm, et une hauteur qui n'est pas inférieure à 2 mm et qui n'est pas supérieure à 4 mm.

14. Cadre arrière de moto selon l'une quelconque des revendications 1 à 13, **caractérisé en ce que** l'alliage de magnésium a une teneur en calcium ou en un élément des terres rares de 0,1 % en poids ou moins.

15. Cadre arrière de moto selon la revendication 14, **caractérisé en ce que** l'alliage de magnésium est un alliage de Mg-Al-Mn.

16. Cadre arrière de moto selon l'une quelconque des revendications 1 à 15, **caractérisé en ce que** le cadre arrière de moto est formé par une technique de moulage.

17. Moto comprenant :
un cadre principal (102) ;
un moteur à combustion interne (108) supporté par le cadre principal (102) ;
le cadre arrière de moto (104) selon l'une quelconque des revendications 1 à 16, le cadre arrière de moto (104) étant relié au cadre principal (102) ;
un tuyau d'échappement (118) relié au moteur à combustion interne (108) ; et
un silencieux (120) relié à une extrémité du tuyau d'échappement (118), dans lequel le tuyau d'échappement (118) est supporté par le cadre arrière de moto (104) de manière à être proche d'une région (160) de la section de fond (140) où la première base (162a, 162b) et la deuxième base (164a, 164b) sont prévues.

18. Moto selon la revendication 17, **caractérisée en ce que** le cadre arrière de moto (104) est relié au cadre principal (102) de manière à ce que, pendant un déplacement, de l'air soit autorisé à circuler dans un espace interne défini par les deux sections de paroi latérales (142, 144) et la section de fond (140).

19. Procédé pour fabriquer le cadre arrière de moto selon l'une quelconque des revendications 1 à 13, **caractérisé en ce que** le cadre arrière de moto (104) est formé par une technique de coulée sous pression en utilisant deux moules (210, 212) comportant chacun une surface (210a, 212a) pour former une ou deux faces principales de la section de fond (140).

20. Procédé selon la revendication 19, **caractérisé en ce que** le cadre arrière de moto est formé en utilisant un alliage de magnésium qui a une teneur en calcium ou en un élément des terres rares de 0,1 % en poids ou moins.

21. Procédé selon la revendication 20, **caractérisé en ce que** l'alliage de magnésium est un alliage de Mg-Al-Mn.
